# FASCICULE DE BREVET EUROPEEN

(11) **EP 2 536 315 B1**
(45) Date de publication et mention de la délivrance du brevet: **22.04.2015**
(21) Numéro de dépôt: 11709988.7
(22) Date de dépôt: 15.02.2011
(51) Int. Cl.: F16B 12/44, A47F 1/12

(54) **DISPOSITIF ET PRESENTOIR DE RANGEMENT ET DE DISTRIBUTION D'OBJETS AVEC POUSSOIR AUTOPORTANT**
VORRICHTUNG UND VITRINE ZUR AUFBEWAHRUNG UND AUSGABE VON OBJEKTEN MIT EINEM SELBSTTRAGENDEN DRÜCKELEMENT
DEVICE AND DISPLAY FOR STORING AND DISPENSING OBJECTS USING A SELF-SUPPORTING PUSH MEMBER

(30) Priorité: 16.02.2010 FR 1000645
(43) Date de publication de la demande: 26.12.2012
(73) Titulaire: Sarl Terbasysteme, 21800 Chevigny-Saint-Sauveur (FR)
(72) Inventeur: LAUTERBACH, Gilles, 21110 Fauverney (FR)
(74) Mandataire: Oudin, Stéphane
(86) Numéro de dépôt international: PCT/FR2011/000091
(87) Numéro de publication internationale: WO 2011/101557

(56) Documents cités:
- US-A1- 2003 217 980

## Description

### Domaine technique

La présente invention concerne un dispositif et un présentoir de rangement et de distribution d'objets avec poussoir autoportant. Ces dispositif et présentoir sont destinés à être utilisés pour la présentation d'articles tels que notamment des boîtes, des paquets ou tout autre article similaire, par exemple de forme parallélépipédique ou cylindrique.

### Technique antérieure

On connaît déjà des dispositifs de rangement et de distribution de paquets ou de boîtes tels que celui décrit dans le brevet US 2003/0217980 où dans EP 0 365 424. Le dispositif de ce dernier comporte un support pourvu de montants latéraux droit, gauche et de montants longitudinaux antérieur, postérieur sensiblement perpendiculaires aux précédents. Les montants latéraux et longitudinaux sont reliés par une plaque de fond dont le dessus est divisé en un certain nombre de couloirs par des séparateurs disposés parallèlement entre eux. Les couloirs s'étendent parallèlement aux montants latéraux. Chaque couloir est apte à recevoir une file d'objets à ranger et à distribuer, par exemple des boîtes. Les extrémités des séparateurs sont logés dans des crans portés par deux barrettes à crans couplées chacune à un des montants longitudinaux antérieur, postérieur du support. Ce dispositif de rangement et de distribution comporte en outre des poussoirs, de type autoportant. Dans la suite de la présente, on appelle poussoir autoportant un poussoir qui se présente sous la forme d'un ensemble autonome qui peut être placé et retiré dans sa globalité quelle que soit la zone de préhension par lequel on le saisit. On entend également par poussoir autoportant un poussoir apte non seulement à pousser les articles vers l'avant mais de plus, apte à supporter seul les produits à présenter. Chaque poussoir autoportant est pourvu d'un profilé définissant deux rainures latérales aptes notamment à guider un coulisseau, emmanché dans ces rainures latérales et mobile entre une position arrière dans laquelle il est disposé vers l'extrémité postérieure du profilé et une position antérieure dans laquelle il est disposé vers l'extrémité antérieure du profilé. Les rainures latérales sont par ailleurs aptes à recevoir des moyens élastiques, tels que par exemple un ressort finement spiralé ou un fil en caoutchouc. Une extrémité des moyens élastiques est fixée à l'extrémité postérieure d'une première rainure latérale et l'autre extrémité est fixée à une partie du coulisseau située dans la seconde rainure latérale du profilé. Les moyens élastiques tendent ainsi à déplacer le coulisseau de sa position arrière vers sa position avant pour que les boîtes disposées sur le poussoir autoportant soient toujours plaquées vers l'avant. La préhension des boîtes est ainsi facilitée. Le poussoir autoportant comporte en outre un embout, prévu à l'extrémité antérieure du profilé et apte à coopérer avec les moyens élastiques, à la manière d'une poulie, pour autoriser le passage et le déplacement des moyens élastiques entre les première et seconde rainures lorsque le coulisseau passe de sa position arrière à sa position avant (pendant la distribution) et réciproquement (pendant l'achalandage). A cet effet, l'embout comporte par exemple une roue folle, pourvue d'une rainure périphérique recevant le ressort ou le fil, cette roue folle permettant, en tournant librement, de limiter les frottements lors du déplacement des moyens élastiques. Les extrémités antérieure et postérieure du profilé sont également logées dans les crans des barrettes à crans. Ces crans permettent ainsi le réglage de la position des séparateurs et des poussoirs pour adapter le dispositif de rangement et de distribution selon les dimensions des boîtes à distribuer. De même, les longueurs des montants latéraux, des montants longitudinaux, des séparateurs et des poussoirs peuvent être adaptées en fonction du dispositif souhaité et des produits à présenter. Les différents éléments constituant le dispositif sont par exemple réalisés en aluminium, en matériau composite ou en tout autre matériau adapté.

De tels dispositifs de rangement et de distribution, s'ils sont pratiques à l'utilisation, restent peu aisés à stocker et à transporter à cause de leur volume. De plus, ils sont lourds à manipuler et sont grands consommateurs de matière, ce qui les rend coûteux.

### Exposé de l'invention

La présente invention vise à remédier à ces inconvénients en proposant un dispositif et un présentoir de rangement et de distribution d'objets avec poussoir autoportant, les dispositif et présentoir permettant de réduire l'encombrement lors du stockage et du transport, le poids et le coût d'un tel dispositif tout en garantissant la solidité du dispositif.

L'invention concerne un dispositif de rangement et de distribution d'objets avec poussoir autoportant, ledit dispositif comportant au moins un support formé par au moins deux montants latéraux et deux montants longitudinaux antérieur et postérieur, ledit support étant apte à recevoir au moins un poussoir autoportant. Ce dispositif de rangement et de distribution est remarquable en ce que lesdits montants latéraux sont couplés respectivement auxdits montants longitudinaux par des éléments de jonction indépendants desdits montant latéraux et desdits montants longitudinaux et aptes à être encastrés dans lesdits montant latéraux et dans lesdits montants longitudinaux pour que ledit support ainsi formé soit rigide et autoportant, ledit support présentant alors une partie centrale évidée, lesdits montants longitudinaux définissant respectivement des surfaces d'appui antérieure et postérieure, chacune apte à recevoir l'appui dudit poussoir autoportant.

Le dispositif selon l'invention peut ainsi être transporté et/ou stocké démonté ; il n'occupe alors qu'un encombrement limité. De plus son poids total est réduit par la partie centrale évidée rendue possible par l'utilisation du poussoir autoportant. Enfin cette structure lui permet d'être robuste.

Les éléments de jonction, lesdits montant latéraux et lesdits montants longitudinaux sont avantageusement agencés pour être démontables les uns des autres.

Les éléments de jonction sont par exemple agencés pour s'encastrer longitudinalement dans lesdits montants longitudinaux. Cet encastrement longitudinal assure la stabilité et la solidité de l'assemblage.

Selon un mode de réalisation avantageux, chaque élément de jonction comporte au moins deux embouts disposés sensiblement perpendiculaires entre eux, chaque montant latéral comporte, en chacune de ses extrémités, au moins un manchon latéral apte à recevoir l'encastrement latéral d'au moins un desdits embouts, chaque montant longitudinal comporte, en chacune de ses extrémités, au moins un manchon longitudinal apte à recevoir l'encastrement longitudinal d'au moins un autre desdits embouts. Le support ainsi formé est rigide et solide.

Chaque montant latéral comporte de préférence au moins une paroi latérale prolongée par lesdits manchons latéraux. Les montants latéraux sont ainsi aptes à empêcher le basculement latéral des boîtes.

Lesdits manchons longitudinaux peuvent être prévus dans le prolongement respectivement desdites surfaces d'appui antérieure et postérieure de chaque montant longitudinal de sorte que la face inférieure desdits manchons longitudinaux soit sensiblement alignée avec lesdites surfaces d'appui antérieure et postérieure correspondantes.

Selon une variante de réalisation, lesdits manchons longitudinaux sont prévus sous lesdites surfaces d'appui antérieure et postérieure de chaque montant longitudinal de sorte que la face inférieure desdits manchons longitudinaux soit située sous lesdites surfaces d'appui antérieure et postérieure correspondantes.

Selon un mode de réalisation avantageux, l'un au moins desdits manchons longitudinaux et latéraux comporte au moins un orifice d'accès apte à laisser un passage pour la solidarisation dudit embout respectivement audit montant longitudinal, latéral, par l'intermédiaire d'au moins un élément de blocage intermédiaire.

Les éléments de jonction peuvent comporter chacun au moins un orifice de passage apte à coopérer avec ledit élément de blocage intermédiaire pour la solidarisation dudit embout respectivement audit montant longitudinal et latéral.

Chaque montant latéral comporte de préférence au moins une paroi latérale traversée par au moins deux orifices d'encastrement, chaque montant longitudinal comporte au moins deux zones d'encastrement prévues en regard desdits orifices d'encastrement et aptes chacune à recevoir l'encastrement dudit élément de jonction traversant ledit orifice d'encastrement correspondant de ladite paroi latérale, ledit élément de jonction comportant au moins une butée apte à prendre appui sur la face de ladite paroi latérale opposée à ladite zone d'encastrement.

Chaque montant longitudinal comporte de préférence un profilé formant un logement dans lequel ladite zone d'encastrement est prévue.

Ladite zone d'encastrement peut être définie par au moins une forme ouverte de section globalement en arc de cercle et reliée à au moins une paroi dudit logement.

Ladite zone d'encastrement peut également être décentrée par rapport audit logement.

L'élément de jonction est avantageusement une vis sapin avec tête.

De manière préférée, l'élément de jonction comporte au moins un doigt de guidage, au moins l'un desdits montant latéraux et longitudinaux comporte au moins un fourreau apte à recevoir ledit doigt de guidage.

Lesdits embouts et manchons ont de préférence des sections sensiblement parallélépipédiques.

Le dispositif peut comporter au moins un séparateur présentant une forme extérieure globale sensiblement similaire à celle d'au moins l'un desdits montants latéraux de manière à pouvoir être obtenus par un outil industriel sensiblement similaire. Les coûts d'outillage sont ainsi réduits.

Le dispositif peut également comporter, des montants longitudinaux antérieur et postérieur ayant des formes extérieures globales sensiblement similaires de manière à pouvoir être obtenus par un outil industriel sensiblement similaire. Les coûts d'outillage sont ainsi réduits.

Le dispositif comporte avantageusement au moins un poussoir autoportant permettant de supporter les boîtes à présenter et de les avancer vers la face avant du dispositif selon l'invention.

Le dispositif peut comporter au moins une traverse prévue entre les montant latéraux, ladite traverse étant apte à supporter ledit poussoir autoportant, ladite traverse étant couplée auxdits montants latéraux par des éléments de jonction complémentaires.

L'invention concerne également un présentoir de rangement et de distribution comportant au moins une structure portante apte à supporter au moins un dispositif de rangement et de distribution. Ce présentoir de rangement et de distribution est remarquable en ce qu'il comporte au moins un dispositif tel que décrit précédemment.

### Description sommaire des dessins

L'invention est décrite ci-après, à titre d'exemple non limitatif, en référence aux dessins annexés sur desquels
- Les figures 1 et 2 sont des vues frontales respectivement d'un montant latéral et d'un montant longitudinal pour un dispositif de rangement et de distribution selon un premier mode de réalisation de l'invention ;
- Les figures 3A-B, 4A-B, 5-B sont respectivement des vues en perspective et de dessus de trois sous-modes de réalisation d'un élément de jonction destiné et apte à être combiné avec les montants latéraux et longitudinaux selon les figures 1 et 2 ;
- Les figures 6 et 7 sont des vues en perspective de dispositifs de rangement et de distribution selon l'invention comportant notamment un montant latéral et un montant longitudinal selon les figures 1 et 2 combinés à un élément de jonction selon respectivement les figures 3A-B et 5-B, l'échelle de la figure 7 étant supérieure à celle de la figure 6 ;
- La figure 8 est une vue frontale d'un montant latéral pour un dispositif de rangement et de distribution selon un second mode de réalisation de l'invention ;
- Les figures 9, 10A-B ; 11,12A-B ; 13, 14A-B sont respectivement une vue de côté d'un montant longitudinal, des vues en perspective et de dessus d'un élément de jonction selon trois sous-modes de réalisation, les montants longitudinaux et les éléments de jonction étant aptes à être combinés avec le montant latéral selon la figure 8 ;
- La figure 15 est une vue en perspective d'un dispositif de rangement et de distribution selon l'invention comportant notamment, respectivement, un montant latérale, un montant longitudinal et un élément de jonction selon les figures 8, 9, 10-B ;
- Les figures 16, 17, 18-B sont respectivement des vues frontales d'un montant latéral, d'un montant longitudinal, de dessus et en perspective d'un élément de jonction pour un dispositif de rangement et de distribution selon un troisième mode de réalisation de l'invention ;
- La figure 19 est une vue en perspective d'un dispositif de rangement et de distribution selon l'invention comportant notamment un montant latéral, un montant longitudinal et un élément de jonction selon les figures 16, 17, 18A-B ;
- Les figures 20A-B sont respectivement une vue frontale et de côté d'un montant latéral pour un dispositif de rangement et de distribution selon un quatrième mode de réalisation de l'invention ;
- La figure 21 est une vue de côté d'un montant antérieur pour un dispositif de rangement et de distribution, apte à être combiné avec le montant latéral des figures 20A-B ;
- La figure 22 est une vue en perspective d'un dispositif de rangement et de distribution selon le quatrième mode de réalisation et comportant notamment un montant latéral et un montant longitudinal selon les figures 20A-B et 21 ;
- Les figures 23A-B et 24 sont des vues similaires aux figures 20A-B et 21, respectivement d'un montant latéral et d'un montant longitudinal pour un dispositif de rangement et de distribution selon un cinquième mode de réalisation de l'invention ;
- Les figures 25A-B sont respectivement des vues de côté et en perspective d'un élément de jonction pour un dispositif de rangement et de distribution selon le cinquième mode de réalisation de l'invention et apte à coopérer avec le montant latéral et le montant longitudinal des figures 23A-B et 24 ;
- Les figures 26 et 27 sont respectivement des vues en perspective et en coupe d'un dispositif de rangement et de distribution selon le cinquième mode de réalisation de l'invention et comportant notamment un montant latéral, un montant longitudinal et un élément de jonction selon les figures 23A-B, 24 et 25-B.

### Description de différents modes de réalisation

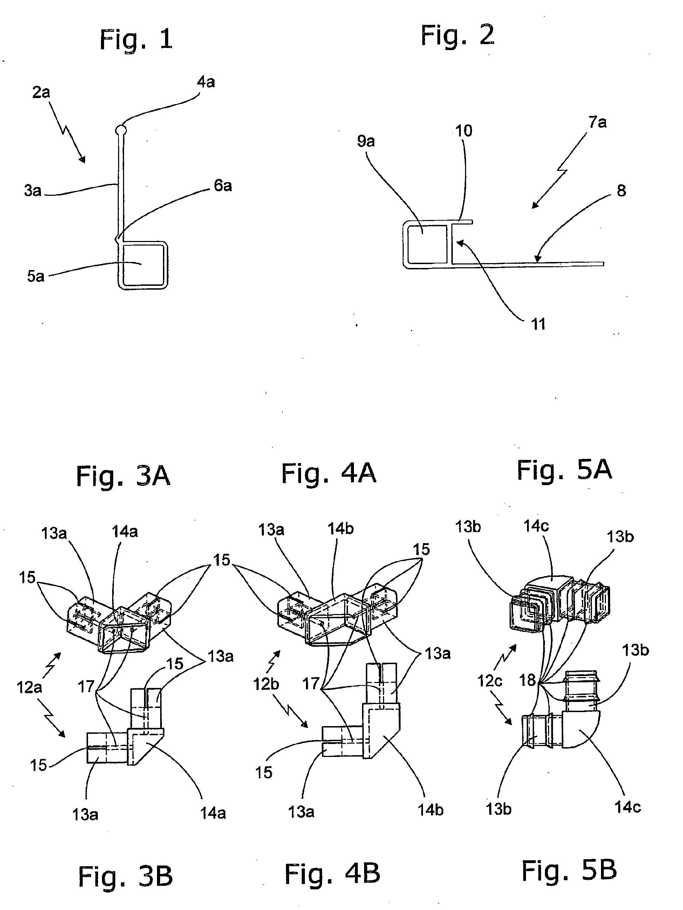

Un premier mode de réalisation des éléments constituant le dispositif 1a, 1b de rangement et de distribution d'objets est décrit ci-après en référence aux figures 1 à 7.

Le montant latéral 2a représenté sur la figure 1 comporte un profilé définissant une paroi latérale 3a dont l'arête supérieure est pourvue d'une première nervure de renfort 4a. Le montant latéral 2a comporte également un manchon latéral 5a ayant une forme globalement parallélépipédique et s'étendant sur toute la longueur de la paroi latérale 3a. Le manchon latéral 5a est disposé de manière à ce que l'une de ses parois soit dans le prolongement de la paroi latérale 3a. Pour former le dispositif 1a, 1b de rangement et de distribution d'objets selon l'invention, on utilise deux montants latéraux 2a disposés symétriquement, en regard l'un de l'autre. Comme décrit plus loin, chaque manchon latéral 5a est apte à recevoir l'encastrement latéral d'embouts. Dans la suite de la présente, on appelle encastrement un emmanchement bloquant ne pouvant se démonter que sous l'action d'un effort de démontage spécifique, supérieur aux efforts auxquels les éléments emmanchés sont soumis pendant l'utilisation normale du dispositif de rangement et de distribution d'objets.

Chaque montant latéral 2a comporte en outre une seconde nervure 6a de renfort prévue à l'intersection entre la paroi latérale 3a et le manchon latéral 5a. La seconde nervure 6a peut bien entendu être prévue à tout autre niveau de la paroi latérale 3a.

Le montant longitudinal 7a représenté sur la figure 2 comporte un profilé définissant une surface d'appui 8 dite antérieure ou postérieure selon que le montant longitudinal 7a est destiné à être utilisé à l'avant ou à l'arrière du dispositif 1a, 1b de rangement et de distribution. Comme décrit plus loin les surfaces d'appui 8 antérieure et postérieure sont aptes chacune à recevoir l'appui d'un poussoir autoportant.

Chaque montant longitudinal 7a comporte également un manchon longitudinal 9a ayant une forme globalement parallélépipédique et s'étendant sur toute la longueur de la surface d'appui 8. Dans ce premier mode de réalisation, le manchon longitudinal 9a est disposé de manière à ce que sa paroi inférieure soit dans le prolongement direct de la surface d'appui 8. Pour former le dispositif 1a, 1b de rangement et de distribution d'objets on utilise deux montants longitudinaux 7a identiques disposés symétriquement, en regard l'un de l'autre. Les montants longitudinaux 7a peuvent ainsi être réalisés au moyen du même outillage ce qui limite les coûts de production. Comme décrit plus loin, chaque manchon longitudinal 9a est destiné à être assemblé aux montants latéraux 2a gauche et droit par des éléments de jonction, décrits plus loin, encastrés longitudinalement dans les montants longitudinaux 7a et latéralement dans les montants latéraux 2a. L'assemblage obtenu est ainsi rigide et solide. Chaque montant longitudinal 7a comporte enfin une aile d'engagement 10 s'étendant de la paroi supérieure du manchon longitudinal 9a, sur toute la longueur du manchon longitudinal 9a, au-dessus et sensiblement parallèlement à la surface d'appui 8. Cette aile d'engagement 10 définit, avec le manchon longitudinal 9a et la surface d'appui 8, une rainure 11 apte à recevoir une barrette à crans décrite plus loin.

Les figures 3A-B, 4A-B et 5-B représentent trois modes de réalisation différents d'éléments de jonction 12a, 12b, 12c aptes à coopérer avec des montants latéraux 2a et longitudinaux 7a tels que respectivement représentés aux figures 1 et 2.

L'élément de jonction 12a des figures 3A-B comporte deux embouts 13a disposés sensiblement perpendiculaires entre eux et séparés par une cornière 14a. Chaque embout 13a présente une forme sensiblement parallélépipédique dont la partie raccordée à la cornière est pleine et dont la partie correspondant à l'extrémité libre est pourvue de deux fentes 15 en croix autorisant une légère déformation de l'embout 13a afin d'autoriser son encastrement dans un manchon longitudinal 9a et/ou latéral 5a. Les deux embouts 13a sont traversés par des trous de passage 17 autorisant le passage de l'air lors de l'encastrement de l'embout 13a dans le montant longitudinal 7a ou latéral 2a. Les embouts 13a et manchons longitudinaux 9a et/ou latéraux 5a sont bien entendu dimensionnés afin de permettre leur encastrement respectif. De manière avantageuse, les embouts 13a ont tous une même forme et des mêmes dimensions. Ils peuvent ainsi être utilisés sans respecter un sens de montage particulier. De même, les manchons longitudinaux 9a et/ou latéraux 5a sont de préférence sensiblement similaires tant au niveau de leur forme que de leurs dimensions. Il est bien entendu également possible de prévoir des embouts différents en forme et/ou dimensions, de même pour les manchons longitudinaux et/ou latéraux. La cornière 14a est formée par deux parois, tangentes aux embouts, disposées perpendiculairement entre-elles, une de leurs arêtes étant tangente à l'arête correspondante de l'autre paroi. Les parois sont reliées dans leurs parties supérieures et inférieures par des plaquettes triangulaires. Les embouts 13a et plaquettes triangulaires sont agencées pour que l'élément de jonction 12a soit sensiblement symétrique par rapport à la hauteur des triangles des plaquettes triangulaires. Chaque élément de jonction 12a est de préférence formé par une pièce monobloc obtenue par exemple par injection.

L'élément de jonction 12b des figures 4A-B est sensiblement similaire au précédent. Les parties similaires sont repérées par les même références Il s'en différencie par les plaquettes de sa cornière 14b qui ne sont pas triangulaires mais trapézoïdales si bien que la symétrie décrite précédemment n'est pas présente dans cet exemple.

L'élément de jonction 12c des figures 5-B est sensiblement similaire à celui des figures 3A-B. Il s'en différencie par les plaquettes de sa cornière 14c qui ont une forme générale de quart de cercle, par les embouts 13b formés par des portions creuses pourvues de bagues 18 de maintien déformables et par le flanc de l'élément de jonction qui est fermé par une paroi en arc de cercle tangente aux quart de disque des plaquettes.

Dans une variante de réalisation non représentée, chaque élément de jonction peut comporter deux embouts séparés par une portion flexible permettant l'articulation et l'orientation relative des embouts.

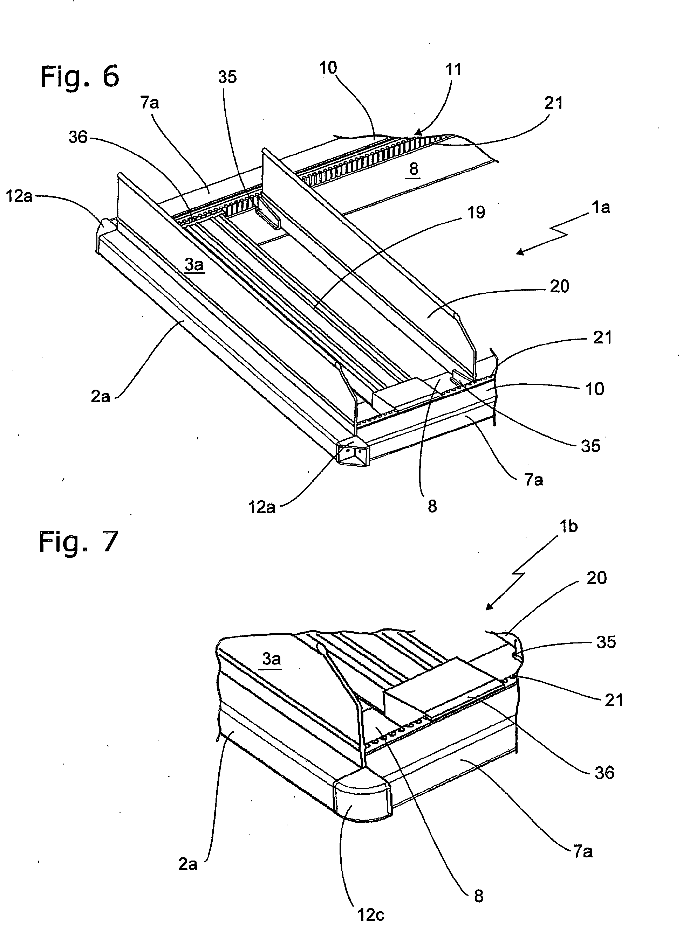

Le dispositif 1a, 1b de rangement et de distribution d'objets selon le premier mode de réalisation est illustré par les figures 6 et 7. Ce dispositif 1a, 1b comporte deux montants latéraux 2a (dont seulement un est représenté) et deux montants longitudinaux 7a (dont deux sont représentés à la figure 6 et seulement un est représenté à la figure 7). Les montants latéraux 2a et les montants longitudinaux 7a sont couplés par les éléments de jonction 12a, 12c pour former un support rigide autoportant. Dans cet exemple, les montants longitudinaux 7a portent un poussoir autoportant 19 et un séparateur 20. Le dispositif 1a, 1b peut bien entendu comporter un nombre supérieur de poussoirs autoportants et de séparateurs. Les montants longitudinaux 7a antérieur et postérieur sont disposés sensiblement parallèlement entre eux de manière à être séparés d'une distance correspondant à la longueur du séparateur 20 et du poussoir autoportant 19. Chaque montant longitudinal 7a antérieur et postérieur est pourvu d'une barrette à crans 21 logée dans la rainure 11 et les montants longitudinaux 7a antérieur et postérieur sont disposés pour que les barrettes à crans 21 soient en regard l'une de l'autre. Ainsi, les positions du séparateur 20 et du poussoir autoportant 19 peuvent être réglées en déplaçant le séparateur 20 et le poussoir autoportant 19 et logeant leurs extrémités dans d'autres crans des barrettes à crans 21. Les extrémités du séparateur 20 et du poussoir autoportant 19 peuvent à cet effet être pourvues chacune d'une pièce de fixation 35, 36 additionnelle comportant un logement apte à recevoir l'extrémité, respectivement du séparateur 20 et du poussoir autoportant 19, et comportant des ergots (non détaillés) aptes à coopérer avec les crans des barrettes à crans 21. Les montants longitudinaux 7a antérieur et postérieur sont pourvus chacun, en leurs deux extrémités, d'éléments de jonction 12a, 12b dont les embouts (non visibles sur ces figures) sont encastrés longitudinalement dans leurs manchons longitudinaux (non visibles sur ces figures). Les autres embouts (non visibles sur ces figures) des éléments de jonction 12a, 12b sont encastrés latéralement dans les manchons latéraux (non visibles sur ces figures) des montants latéraux 2a qui sont ainsi plaqués contre les extrémités des montants longitudinaux 7a antérieur et postérieur. Les montants longitudinaux 7a antérieur et postérieur ainsi couplés aux montants latéraux 2a par les éléments de jonction 12a, 12b forment alors un support autoportant. Dans la suite de la présente, on appelle support autoportant, un support qui se présente sous la forme d'un ensemble autonome qui peut être placé et déplacé dans sa globalité, quelle que soit la zone de préhension par lequel on le saisit. Les parois latérales 3a des montants latéraux 2a permettent de retenir les boîtes (non représentées), rangées sur le dispositif 1a, 1b de rangement et de distribution, en empêchant leur basculement latéral.

Dans ce premier mode de réalisation, les parois inférieures des manchons latéraux 5a et longitudinaux 9a sont situées dans un même plan, sensiblement confondu avec celui des surfaces d'appui 8 formées par les montants longitudinaux 7a antérieur et postérieur.

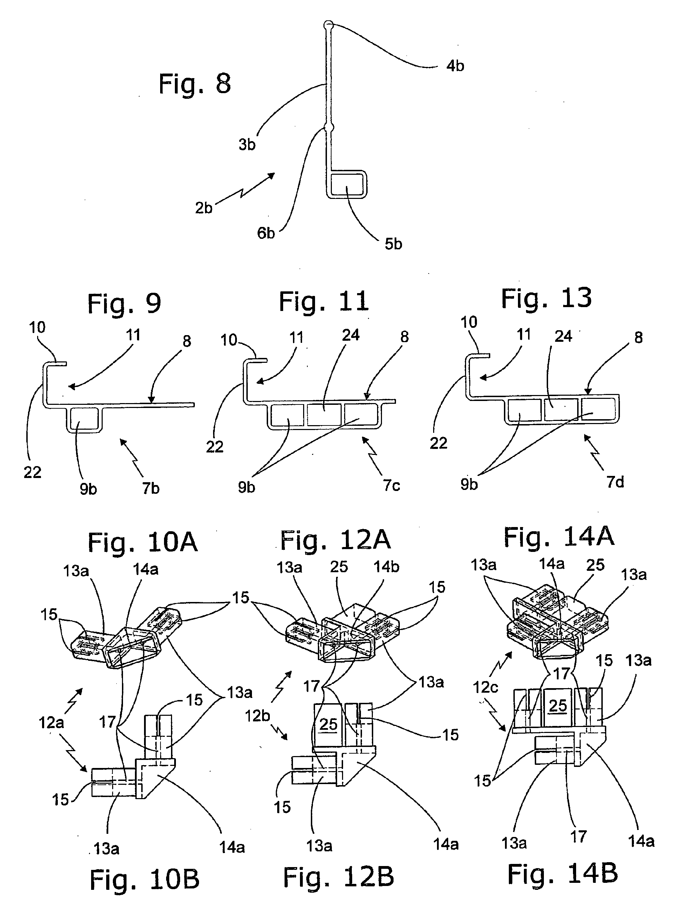

Un second mode de réalisation des éléments constituant le dispositif 1c de rangement et de distribution d'objets est décrit ci-après en référence aux figures 8 à 15.

Le montant latéral 2b représenté sur la figure 8 est sensiblement similaire à celui du premier mode de réalisation et représenté à la figure 1. Il comporte également une paroi latérale 3b, une première nervure 4b et un manchon latéral 5b. Il s'en différencie par une hauteur de paroi latérale 3b supérieure et par l'emplacement de la seconde nervure 6b de renfort, ici disposée dans la partie médiane de la paroi latérale 3b.

Les montants longitudinaux 7b, 7c, 7d représentés sur les figures 9, 11 et 13 comportent chacun un profilé définissant une surface d'appui 8 antérieure ou postérieure et apte à recevoir l'appui d'un poussoir autoportant. Cette surface d'appui 8 est similaire à celle de la figure 1 et repérée par la même référence. Chaque montant longitudinal 7b, 7c, 7d du dispositif 1c de ce second mode de réalisation comporte également au moins un manchon longitudinal 9b, similaire à celui de la figue 1 et repéré par la même référence. Chaque manchon longitudinal 9b a une forme globalement parallélépipédique et s'étend sur toute la longueur de la surface d'appui 8. Chaque manchon longitudinal 9b est disposé de manière à ce que sa paroi inférieure soit sous la surface d'appui 8 et que sa paroi supérieure soit sensiblement confondue avec la surface d'appui 8. Les manchons longitudinaux 9b sont ainsi disposés directement sous la surface d'appui 8. Comme décrit plus loin, chaque montant longitudinal 7b, 7c, 7d est destiné à être assemblé à deux montants latéraux 2b, par encastrement longitudinal d'éléments de jonction reliant les montants longitudinaux 7b, 7c, 7d aux montants latéraux 2b. Chaque montant longitudinal 7b, 7c, 7d comporte enfin un retour 22 s'étendant sensiblement perpendiculairement à la surface d'appui 8, sur toute la longueur de cette surface d'appui 8. Ce retour 22 est prolongé par une aile d'engagement 10 s'étendant sur toute la longueur du retour 22, au-dessus et sensiblement parallèlement à la surface d'appui 8. Cette aile d'engagement 10 définit, avec le retour 22 et la surface d'appui 8, une rainure 11 apte à recevoir une barrette à crans décrite plus loin. Pour former le dispositif 1c de rangement et de distribution d'objets on utilise deux montants longitudinaux 7b, 7c, 7d identiques, disposés symétriquement, en regard l'un de l'autre. Les montants longitudinaux 7b, 7c, 7d antérieur et postérieur peuvent ainsi être réalisés au moyen du même outillage, par exemple une filière.

En référence à la figure 9, le montant longitudinal 7b comporte un manchon longitudinal 9b unique. En référence à la figure 11, le montant longitudinal 7c comporte un premier et un second manchons longitudinaux 9b séparés par un fourreau 24. Dans cet exemple le fourreau 24 a des formes et des dimensions similaires à celles des manchons longitudinaux 9b et le premier et second manchon longitudinaux 9b et fourreau 24 sont tangents deux à deux entre eux et la paroi latérale externe du second manchon longitudinal 9b est alignée avec le bord de la surface d'appui 8. Le montant longitudinal 7d de la figure 13 est sensiblement similaire au précédent. Il s'en différencie par la paroi latérale externe du second manchon longitudinal 9b qui n'est pas alignée avec le bord de la surface d'appui 8 mais décalée sous la surface d'appui 8.

Les figures 10A-B, 12A-B et 14A-B représentent trois modes de réalisation différents d'éléments de jonction 12a, 12d, 12e aptes à coopérer avec des montants latéraux 2b tels que représentés sur la figure 8 et des montants longitudinaux 7b, 7c, 7d tels que respectivement représentés aux figures 9, 11 et 13

L'élément de jonction 12a des figures 10A-B est sensiblement similaire à celui illustré par les figures 3A et 3B. Il ne s'en différencie que par des dimensions différentes. Aussi les mêmes références ont été conservées. Les embouts 13a de cet élément de jonction 12a sont aptes à être encastrés dans les manchons longitudinaux 9b et latéraux 5b des montants latéraux 2b et longitudinaux 7b des figures 8 et 9.

L'élément de jonction 12d des figures 12A-B est sensiblement similaire au précédent. Il s'en différencie par une des parois tangentes aux embouts 13a qui est prolongée le long de l'autre embout 13a et qui comporte un doigt de guidage 25. Cet élément de jonction 12d est apte à coopérer avec les montants latéraux 2b et longitudinaux 7c, 7d des figures 8, 11 et 13, les embouts 13a étant encastrés respectivement dans le manchon latéral 5b du montant latéral 2b et dans le premier manchon longitudinal 9b du montant longitudinal 7c, 7d, le doigt de guidage 25 étant logé dans le fourreau 24 du montant longitudinal 7c, 7d.

L'élément de jonction 12e des figures 14A-B est sensiblement similaire au précédent. Il s'en différencie par la paroi prolongée qui l'est encore davantage dans cet exemple et qui, au-delà du doigt de guidage 25, comporte un second embout 13a. Cet élément de jonction 13e est apte à coopérer avec les montants latéraux 2b et longitudinaux 7c, 7d des figures 8, 11 et 13, les embouts 13a étant encastrés respectivement dans le manchon latéral 5b du montant latéral 2b et dans les premier et troisième manchons longitudinaux 9b du montant longitudinal 7c, 7d, le doigt de guidage 25 étant logé dans le fourreau 24 du montant longitudinal 7c, 7d.

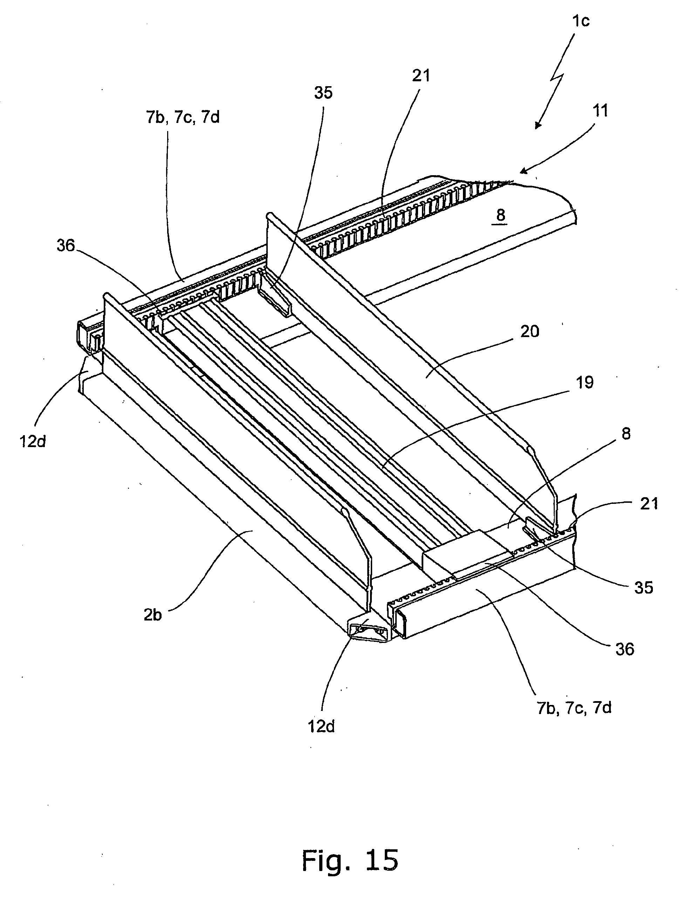

Le dispositif 1c de rangement et de distribution d'objets selon le second mode de réalisation est illustré par la figure 15. Ce dispositif 1c est sensiblement similaire aux précédents et les éléments identiques sont repérés par les mêmes références. Il s'en différencie principalement par le fait que, si les manchons latéraux et longitudinaux (non visibles sur cette figure) sont situés dans un même plan, ce plan est décalé sous celui des surfaces d'appui 8 formées par les montants longitudinaux 7b, 7c, 7d antérieur et postérieur.

Dans les deux modes de réalisation précédents, chaque manchon latéral 5b et/ou longitudinal 9b définit un logement, fermé dont la paroi est continue. Chaque manchon latéral et/ou longitudinal peut bien entendu définir un logement ouvert dont la paroi est discontinue.

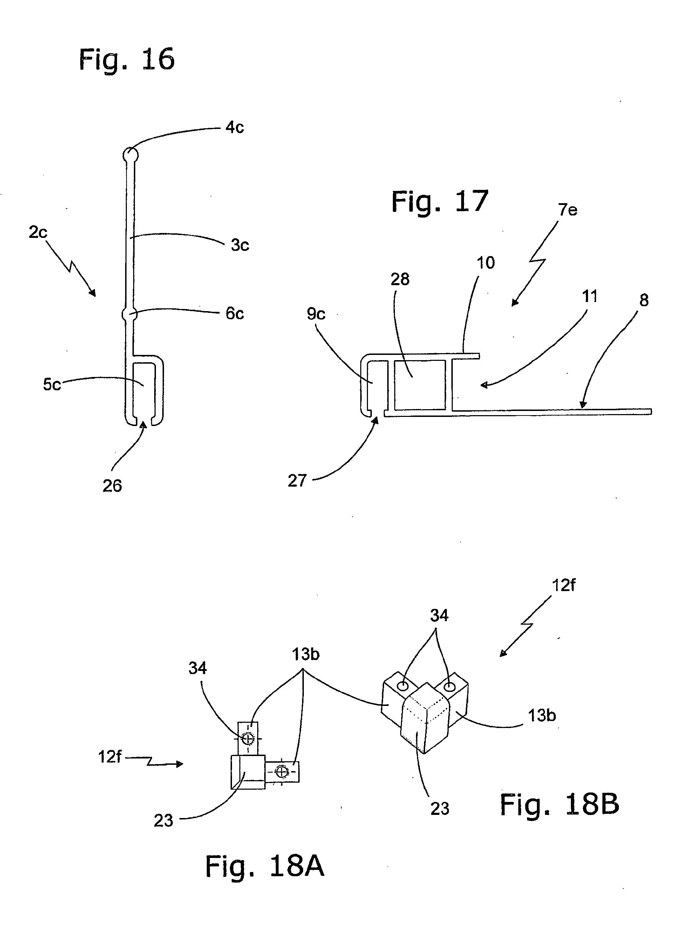

Un troisième mode de réalisation des éléments constituant le dispositif 1d de rangement et de distribution d'objets est décrit ci-après en référence aux figures 16 à 19.

Le montant latéral 2c représenté sur la figure 16 est sensiblement similaire à celui du premier mode de réalisation et représenté sur la figure 1. Il comporte également une paroi latérale 3c, une première nervure 4c et un manchon latéral 5c. Il s'en différencie d'une part par l'emplacement de la seconde nervure de renfort 6c disposée dans la partie médiane de la paroi latérale 3c et d'autre part par le manchon latéral 5c qui est ouvert dans sa partie inférieure. Le montant latéral 2c comporte un orifice d'accès 26 prévu sous le manchon latéral 5c et se présentant sous la forme d'une fente s'étendant sur toute la longueur du manchon latéral 5c. Comme décrit plus loin, cet orifice d'accès 26 autorise le passage d'éléments de blocage intermédiaire pour solidariser le montant latéral 2c à des éléments de jonction.

Dans une variante de réalisation non représentée, la fente peut être remplacée par au moins deux orifices prévus aux extrémités du montant latéral.

Dans une autre variante de réalisation non représentée, la fente ou de manière générale le ou les orifices d'accès peuvent être prévus au travers des parois gauche et/ou droite du manchon latéral.

Le montant longitudinal 7e représenté sur la figure 17, comporte un profilé définissant une surface d'appui 8 antérieure ou postérieure et apte à recevoir l'appui d'un poussoir autoportant. Le montant longitudinal 7e du dispositif de ce troisième mode de réalisation comporte un manchon longitudinal 9c ayant une forme globalement parallélépipédique et s'étendant sur toute la longueur de la surface d'appui 8. Comme décrit plus loin, le montant longitudinal 7e est destiné à être assemblé aux montants latéraux 2c par des éléments de jonction s'encastrant respectivement dans les montants longitudinaux 7e et dans les montants latéraux 2c. Le montant longitudinal 7e comporte également un orifice d'accès 27 se présentant sous la forme d'une fente sensiblement similaire à celle prévue dans le montant latéral 2c précédemment décrit. Le montant longitudinal 7e comporte de plus un logement de renfort 28 longitudinal, tangent au manchon longitudinal 9c et s'étendant sur toute la longueur du manchon longitudinal 9c. Le logement de renfort 28 et le manchon longitudinal 9c sont disposés de manière à ce que la fente 27 et la paroi inférieure du logement de renfort 28 soient sensiblement alignées avec la surface d'appui 8. Le montant longitudinal 7e comporte enfin une aile d'engagement 10 s'étendant sur toute la longueur du logement de renfort 28, au-dessus et sensiblement parallèlement à la surface d'appui 8. Cette aile d'engagement 10 définit, avec le logement de renfort 28 et la surface d'appui 8, une rainure 11 apte à recevoir une barrette à crans décrite plus loin. Pour former le dispositif 1d de rangement et de distribution d'objets on utilise deux montants longitudinaux 7e identiques disposés symétriquement en regard l'un de l'autre.

L'élément de jonction 12f des figures 18-B comporte deux embouts 13b disposés sensiblement perpendiculaires entre eux et séparés par un plot 23 plein, de forme sensiblement parallélépipédique. Chaque embout 13b présente une forme sensiblement parallélépipédique pleine, traversée chacune par un orifice de passage 34 apte à recevoir un élément de blocage intermédiaire (décrit plus loin) pour solidariser le montant latéral 2c à l'élément de jonction 12f.

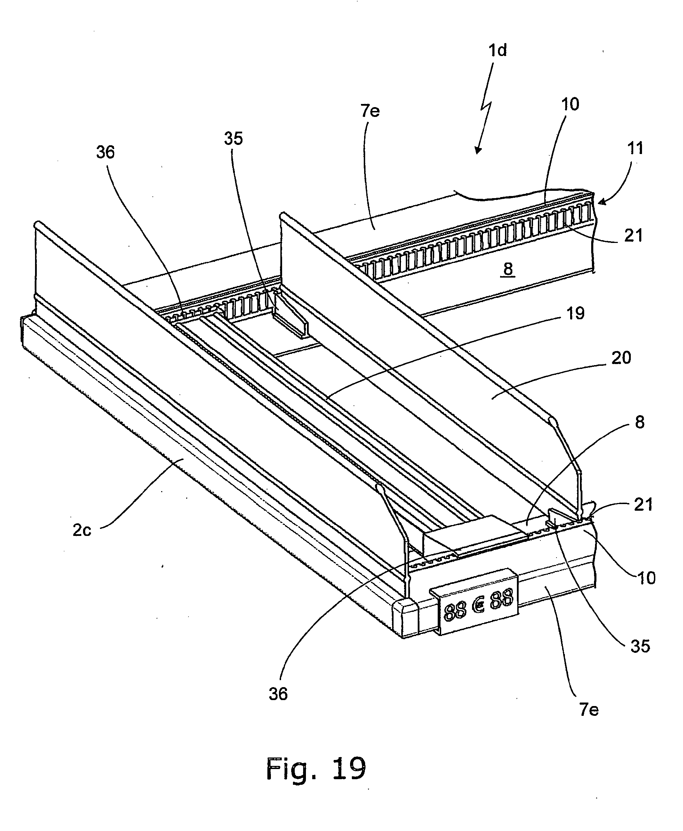

Le dispositif 1d de rangement et de distribution d'objets selon le troisième mode de réalisation est illustré par la figure 19. Ce dispositif 1d est sensiblement similaire aux précédents et les éléments identiques sont repérés par les mêmes références. Il s'en différencie principalement par le fait que les embouts (non visibles sur cette figure) encastrés dans les manchons latéraux et longitudinaux (non visibles sur cette figure) sont solidarisés à ces mêmes manchons latéraux et longitudinaux par l'intermédiaire de vis (non représentées), insérées par le dessous, dont la tête de chacune est en appui, de part et d'autre de la fente, sous le manchon latéral, longitudinal, le corps de la vis traversant la fente pour être vissé dans l'orifice de passage prévu dans l'élément de jonction. Les éléments de jonction 12f sont ainsi solidarisés respectivement aux montants longitudinaux 7e et aux montants latéraux 2c pour former le support autoportant rigide.

Dans ce troisième mode de réalisation, les manchons latéraux et longitudinaux sont situés dans un même plan, sensiblement confondu avec celui des surfaces d'appui 8 formées par les montants longitudinaux 7e antérieur et postérieur.

Dans les deux modes de réalisation précédents, les éléments de jonction sont encastrés longitudinalement dans les montants longitudinaux et latéralement dans les montants latéraux.

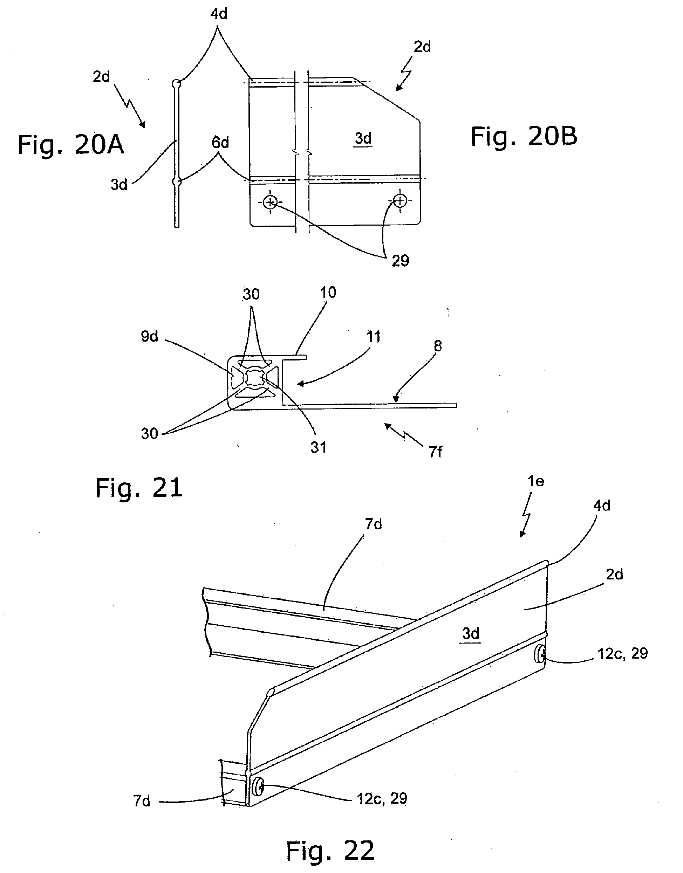

Un quatrième mode de réalisation des éléments constituant le dispositif 1e de rangement et de distribution d'objets est décrit ci-après en référence aux figures 20A à 22.

Le montant latéral 2d représenté sur les figures 20A-B comporte une paroi latérale 3d dont l'arête supérieure est pourvue d'une première nervure de renfort 4d et dont la partie médiane est pourvue d'une seconde nervure 6d de renfort. La paroi latérale 3d est traversée par au moins deux orifices d'encastrement 29 (visibles sur la figure 20B) prévus chacun vers une des extrémités de la paroi latérale 3d. Comme décrit plus loin, ces orifices d'encastrement 29 autorisent l'encastrement d'éléments de jonction décrits plus loin pour solidariser les montants latéraux 2d à des montants longitudinaux 7f décrits ci-après.

Le montant longitudinal 7f représenté sur la figure 21 est sensiblement similaire à celui du premier mode de réalisation représenté sur la figure 2. Il comporte également un profilé définissant une surface d'appui 8 et un manchon longitudinal 9d, une aile d'engagement 10 et une rainure 11. Il s'en différencie par le fait que le manchon longitudinal 9d définit une zone d'encastrement 31, elle-même apte à permettre l'encastrement de l'élément de jonction. A cet effet, dans cet exemple, l'intérieur du manchon longitudinal 9d est pourvu de quatre ailes 30 définissant une forme en croix dont l'intersection des branches définit une zone d'encastrement 31 de forme sensiblement cylindrique. Les ailes et la forme en croix s'étendent sur toute la longueur du manchon longitudinal 9d. Dans une variante de réalisation non représentée, les ailes et la forme en croix sont localisées aux extrémités du manchon longitudinal. Par ailleurs, le manchon longitudinal, les ailes et la forme en croix peuvent être formés d'un élément unique ou de plusieurs éléments assemblés.

L'élément de jonction 12c selon ce quatrième mode de réalisation n'est pas détaillé, il se présente sous la forme d'une vis à tête.

Le dispositif 1e de rangement et de distribution d'objets selon le quatrième mode de réalisation est illustré par la figure 22. Ce dispositif 1e comporte deux montants latéraux 2d (dont seulement un est représenté) et deux montants longitudinaux 7f, disposés de manière similaire à ceux des dispositifs précédents. Les montants latéraux 2d droit et gauche sont disposés aux extrémités des montants longitudinaux 7f antérieur et postérieur de sorte que les orifices d'encastrement 29 des montants latéraux 2d soient en regard des zones d'encastrement 31 des montants longitudinaux 7f antérieur et postérieur. Des vis à tête 12c sont insérées dans les orifices d'encastrement 29 de sorte que les têtes des vis 12c soient en appui sur les parois latérales extérieures des montants latéraux 2d et que les portions filetées soient en prise avec les zones d'encastrement 31 des montants longitudinaux 7f.

Dans ce quatrième mode de réalisation, les manchons longitudinaux 9d sont situés dans un plan sensiblement confondu avec celui des surfaces d'appui formées par les montants longitudinaux 7f antérieur et postérieur.

### Meilleure manière de réaliser l'invention

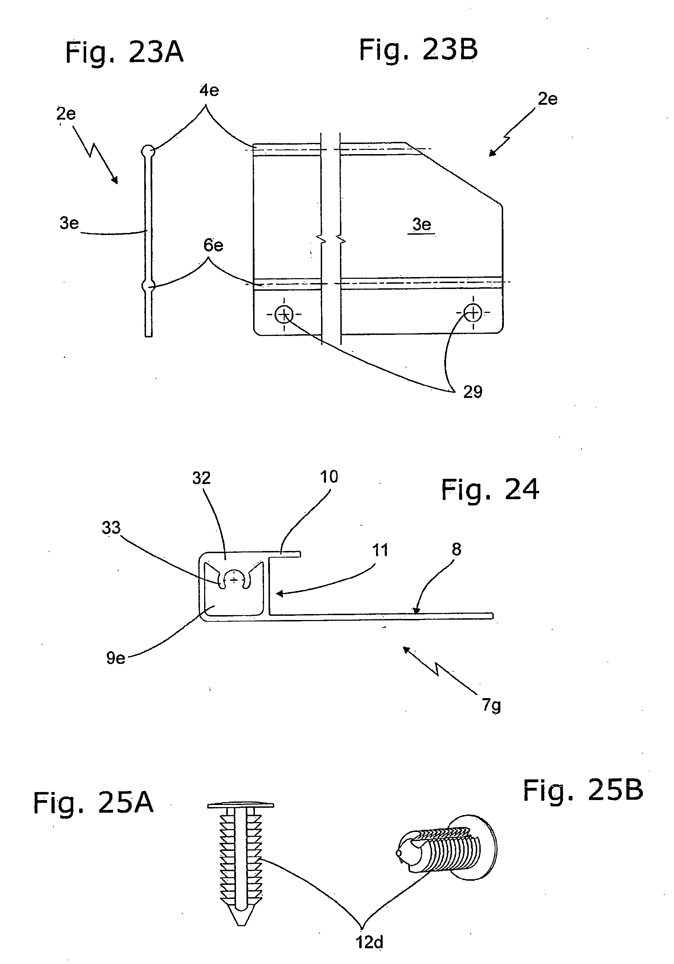

Un cinquième mode de réalisation des éléments constituant le dispositif 1f de rangement et de distribution d'objets est décrit ci-après en référence aux figures 23A à 27.

Le montant latéral 2e représenté sur les figures 10A-B est sensiblement similaire à celui du quatrième mode de réalisation et représenté sur les figures 20A et 20B. Il comporte également paroi latérale 3e, une première nervure de renfort 4e, une seconde nervure 6e et des orifices d'encastrement 29.

Le montant longitudinal 7g représenté sur la figure 24 est sensiblement similaire à celui du quatrième mode de réalisation et représenté sur la figure 21. Il comporte également un profilé définissant une surface d'appui 8 et un manchon longitudinal 9e, une aile d'engagement 10 et une rainure 11. Il s'en différencie par le fait que l'intérieur du manchon longitudinal 9e est pourvu d'un renflement 32 prolongé par une zone d'encastrement 33 ayant une forme ouverte, globalement en arc de cercle, et reliée à au moins une paroi du manchon longitudinal 9e. Le renflement 32 et la zone d'encastrement 33 s'étendent sur toute la longueur du manchon longitudinal 9e. Dans une variante de réalisation non représentée, le renflement et la forme ouverte sont localisés aux extrémités du manchon longitudinal. Par ailleurs, le manchon longitudinal, le renflement et la forme ouverte peuvent être formés d'un élément unique ou de plusieurs éléments assemblés.

L'élément de jonction 12d des figures 25A-B est une vis sapin réalisée par exemple en matériau plastique ou en tout autre matériau adapté. Cette vis sapin 12d est destinée à s'encastrer dans la zone d'encastrement 33 du montant longitudinal 7g. Le diamètre des vis sapin 12d utilisées ainsi que celui des orifices d'encastrement 29 des montants latéraux 2e et des zones d'encastrement 33 des montants longitudinaux 7g sont adaptés pour autoriser le passage des vis sapin 12d au travers des orifices d'encastrement 29 des montants latéraux 7e et permettre l'insertion en force des vis sapin 12d dans les montants longitudinaux 7g pour obtenir l'encastrement longitudinal.

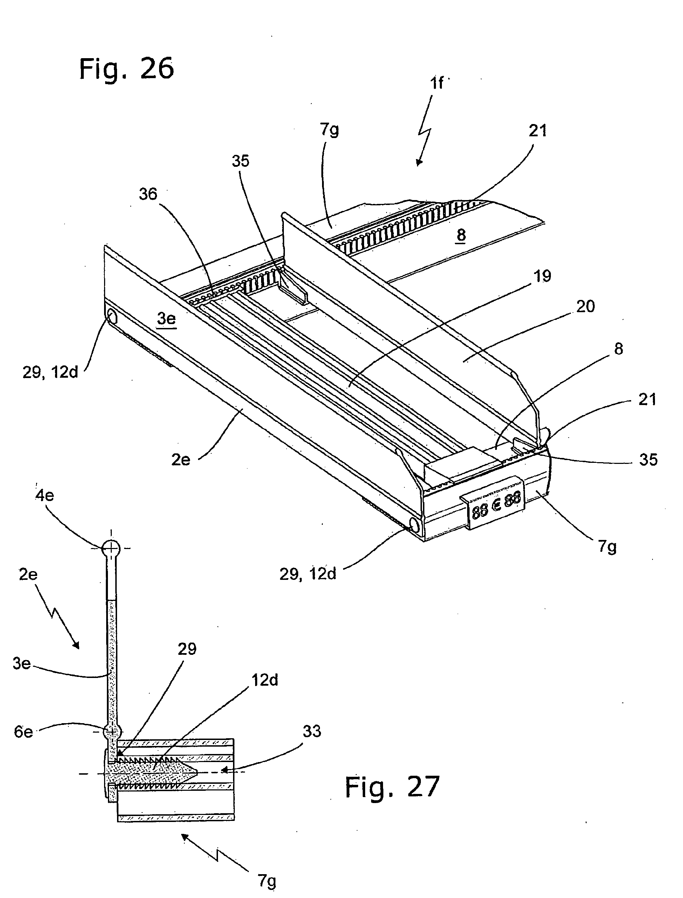

Le dispositif 1f de rangement et de distribution d'objets selon le cinquième mode de réalisation est illustré par les figures 26 et 27. Ce dispositif 1f comporte deux montants latéraux 2e (dont seulement un est représenté sur cette figure) et deux montants longitudinaux 7g, disposés de manière similaire à ceux des dispositifs précédents. Les montants latéraux 2e droit et gauche sont disposés aux extrémités des montants longitudinaux 7g antérieur et postérieur de sorte que les orifices d'encastrement 29 des montants latéraux 3e soient en regard des zones d'encastrement 33 des montants longitudinaux 7g antérieur et postérieur. Des vis sapin 12d sont insérées dans les orifices d'encastrement 29 de sorte que leurs têtes soient en appui sur les parois latérales extérieures des montants latéraux 2e et que les bagues déformables des vis sapin 12d soient en prise avec la zone d'encastrement 33 correspondante. Le fait que chaque zone d'encastrement 33 en forme ouverte d'arc de cercle soit décentrée par rapport au logement du manchon longitudinal 9e correspondant permet de ménager suffisamment de matière autour des orifices d'encastrement 29, en particulier sous l'orifice d'encastrement 29, pour assurer une solidarisation efficace au moyen des vis sapin 12d. Ce dispositif 1f comporte en outre un séparateur 20 et un poussoir autoportant 19.

Dans ce cinquième mode de réalisation, les manchons longitudinaux 9e sont situés dans un même plan, sensiblement confondu avec celui des surfaces d'appui 8 formées par les montants longitudinaux 7g antérieur et postérieur.

Dans ce cinquième mode de réalisation, les montants latéraux 2e présentent la même forme extérieure globale que le (ou les) séparateur(s) 20. Les séparateurs 20 et les montants latéraux 2e peuvent ainsi être obtenus par un outil industriel sensiblement similaire.

Dans tous les exemples décrits, le coulisseau du poussoir autoportant est représenté sans plaque avant. Il est bien entendu que le coulisseau peut être pourvu d'une telle plaque permettant de retenir efficacement les boîtes à distribuer en évitant leur basculement vers l'avant.

Dans chacun des modes de réalisation précédents, les éléments de jonction permettent le démontage des montants longitudinaux et latéraux. Si l'un des éléments constituant le dispositif de rangement et de distribution est abimé, cet élément peut être changé individuellement, les autres éléments étant conservés. Cet aspect démontable du dispositif permet donc d'assurer la maintenance à long terme du dispositif pour un coût modéré.

Avant montage, le dispositif selon l'invention se présente sous la forme d'un kit comportant les différents éléments prêts à être assemblés. Cette configuration permet de limiter l'encombrement pour le stockage et ou le déplacement du dispositif.

Dans une variante de réalisation non représentée, le dispositif de rangement et de distribution selon l'invention comporte une (ou plusieurs) traverse(s) prévue(s) entre les montant latéraux. Cette traverse est ainsi apte à supporter par exemple la partie centrale du poussoir autoportant lorsque le support autoportant présente une profondeur importante. De manière générale, le poussoir autoportant du dispositif selon l'invention est porté uniquement par les surfaces d'appui des montants longitudinaux. La partie centrale du support autoportant peut ainsi être évidée de manière à réduire le poids total du dispositif et la quantité de matière nécessaire pour la fabriquer.

### Possibilités d'application industrielle

Le dispositif de rangement et de distribution, le présentoir et le montant selon l'invention sont utilisés pour la présentation d'articles tels que notamment des boîtes, des paquets ou tout autre article similaire, par exemple de forme parallélépipédique ou cylindrique. Ces dispositifs peuvent être utilisés dans des lieux de stockage et/ou de vente tels que par exemple des pharmacies, des bureaux de tabac ou dans tout autre lieu adapté.

Il est bien entendu que les exemples décrits ne sont que des illustrations particulières et en aucun cas limitatives des domaines d'application de l'invention. L'Homme de l'art pourra apporter des aménagements de taille, de forme et de matériau aux exemples de réalisation particulier sans pour autant sortir du cadre de la présente invention.

## Revendications

1. Dispositif (1a-f) de rangement et de distribution d'objets avec poussoir autoportant (19) comportant au moins un support formé par au moins deux montants latéraux (2a-e) et deux montants longitudinaux (7a-g) antérieur et postérieur, ledit support étant apte à recevoir au moins un poussoir autoportant (19), **caractérisé en ce que** lesdits montants latéraux (2a-e) sont couplés respectivement auxdits montants longitudinaux (7a-g) par des éléments de jonction (12a-d) indépendants desdits montant latéraux (2a-e) et desdits montants longitudinaux (7a-g) et aptes à être encastrés dans lesdits montant latéraux (2a-e) et dans lesdits montants longitudinaux (7a-g) pour que ledit support ainsi formé soit rigide et autoportant, ledit support présentant alors une partie centrale évidée, lesdits montants longitudinaux (7a-g) définissant respectivement des surfaces d'appui (8) antérieure et postérieure, chacune apte à recevoir l'appui dudit poussoir autoportant (19).

2. Dispositif (1a-f) selon la revendication précédente, **caractérisé en ce que** lesdits éléments de jonction (12a-d), lesdits montant latéraux (2a-e) et lesdits montants longitudinaux (7a-g) sont agencés pour être démontables les uns des autres.

3. Dispositif (1a-f) selon l'une quelconque des revendications précédente, **caractérisé en ce que** lesdits éléments de jonction (12a-d) sont agencés pour s'encastrer longitudinalement dans lesdits montants longitudinaux (7a-g).

4. Dispositif (1a-d) selon l'une quelconque des revendications précédentes, **caractérisé en ce que** chaque élément de jonction (12a-f) comporte au moins deux embouts (13a-b) disposés sensiblement perpendiculaires entre eux, **en ce que** chaque montant latéral (2a-c) comporte, en chacune de ses extrémités, au moins un manchon latéral (5a-c) apte à recevoir l'encastrement latéral d'au moins un desdits embouts (13a-b), **en ce que** chaque montant longitudinal (7a-e) comporte, en chacune de ses extrémités, au moins un manchon longitudinal (9a-c) apte à recevoir l'encastrement longitudinal d'au moins un autre desdits embouts (13a-b).

5. Dispositif (1a-d) selon la revendication précédente, **caractérisé en ce que** chaque montant latéral (2a-c) comporte au moins une paroi latérale (3a-c) prolongée par lesdits manchons latéraux (5a-c).

6. Dispositif (1a-d) selon l'une quelconque des revendications 4 ou 5, **caractérisé en ce que** lesdits manchons longitudinaux (9a-c) sont prévus dans le prolongement respectivement desdites surfaces d'appui (8) antérieure et postérieure de chaque montant longitudinal (7a-e) de sorte que la face inférieure desdits manchons longitudinaux (9a-c) soit sensiblement alignée avec lesdites surface d'appui (8) antérieure et postérieure correspondantes.

7. Dispositif (1c) selon l'une quelconque des revendications 4 à 6, **caractérisé en ce que** lesdits manchons longitudinaux (9b) sont prévus sous lesdites surfaces d'appui (8) antérieure et postérieure de chaque montant longitudinal (7b-d) de sorte que la face inférieure desdits manchons longitudinaux (9b) soit située sous lesdites surface d'appui (8) antérieure et postérieure correspondantes.

8. Dispositif (1d) selon l'une quelconque des revendications 5 et 6, **caractérisé en ce que** l'un au moins desdits lesdits manchons longitudinaux (9c) et latéraux (5c) comporte au moins un orifice d'accès (27) apte à laisser un passage pour la solidarisation dudit embout (13b) respectivement audit montant longitudinal (7e) et latéral (2c), par l'intermédiaire d'au moins un élément de blocage intermédiaire.

9. Dispositif (1d) selon la revendication précédente, **caractérisé en ce que** lesdits éléments de jonction (12f) comportent chacun au moins un orifice de passage (34) apte à coopérer avec ledit élément de blocage intermédiaire pour la solidarisation dudit embout (13b) respectivement audit montant longitudinal (7e) et latéral (2c).

10. Dispositif (1e-1f) selon l'une quelconque des revendications 1 à 3, **caractérisé en ce que** chaque montant latéral (2d-e) comporte au moins une paroi latérale (3d-e) traversée par au moins deux orifices d'encastrement (29), **en ce que** chaque montant longitudinal (7f-g) comporte au moins deux zones d'encastrement (31, 33) prévues en regard desdits orifices d'encastrement (29) et aptes chacune à recevoir l'encastrement dudit élément de jonction (12c-d) traversant ledit orifices d'encastrement (29) correspondant de ladite paroi latérale (3d-e), ledit élément de jonction (12c-d) comportant au moins une butée apte à prendre appui sur la face de ladite paroi latérale (3d-e) opposée à ladite zone d'encastrement (31, 33).

11. Dispositif (1e-1f) selon la revendication 10, **caractérisé en ce que** chaque montant longitudinal (7f-g) comporte un profilé formant un logement dans lequel ladite zone d'encastrement (31, 33) est prévue.

12. Dispositif (1f) selon la revendication 11, **caractérisé en ce que** ladite zone d'encastrement (33) est définie par au moins une forme ouverte de section globalement en arc de cercle et reliée à au moins une paroi dudit logement.

13. Dispositif (1f) selon la revendication 11, **caractérisé en ce que** ladite zone d'encastrement (33) est décentrée par rapport audit logement.

14. Dispositif (1f) selon la revendication 10, **caractérisé en ce que** ledit élément de jonction (12d) est une vis sapin avec tête.

15. Dispositif (1c) selon la revendication 4, **caractérisé en ce que** ledit élément de jonction (12d-e) comporte au moins un doigt de guidage (25), au moins l'un desdits montant latéraux et longitudinaux (2b-d, 7b-d) comporte au moins un fourreau (24) apte à recevoir ledit doigt de guidage (25).

16. Dispositif selon la revendication 4, **caractérisé en ce que** lesdits embouts (13a-b) et manchons latéraux (5a-c) et longitudinaux (9a-c) ont des sections sensiblement parallélépipédiques.

17. Dispositif (1a-f) selon l'une quelconque des revendications précédentes, **caractérisé en ce qu'**il comporte au moins un séparateur (20) présentant une forme extérieure globale sensiblement similaire à celle d'au moins l'un desdits montant latéraux (2a-e) de manière à pouvoir être obtenus par un outil industriel sensiblement similaire.

18. Dispositif (1a-f) selon l'une quelconque des revendications précédentes, **caractérisé en ce qu'**il comporte des montants longitudinaux (7a-g) antérieur et postérieur ayant des formes extérieures globales sensiblement similaires de manière à pouvoir être obtenus par un outil industriel sensiblement similaire.

19. Dispositif (1a-f) selon l'une quelconque des revendications précédentes, **caractérisé en ce qu'**il comporte au moins un poussoir autoportant (19).

20. Dispositif selon l'une quelconque des revendications précédente, **caractérisé en ce qu'**il comporte au moins une traverse prévue entre les montant latéraux, ladite traverse étant apte à supporter ledit poussoir autoportant, ladite traverse étant couplée audit montant latéraux par des éléments de jonction.

21. Présentoir de rangement et de distribution comportant au moins une structure portante apte à supporter au moins un dispositif de rangement et de distribution, **caractérisé en ce qu'**il comporte au moins un dispositif (1a-f) selon l'une quelconque des revendications précédentes.

## Patentansprüche

1. Vorrichtung (1a-f) zur Aufbewahrung und Ausgabe von Objekten mit einem Selbsttragenden Druckelement (19), umfassend mindestens einen Träger, gebildet aus mindestens zwei seitlichen Streben (2a-e) und zwei vorderen und hinteren Längsstreben (7a-g), wobei der Träger ausgelegt ist, um mindestens ein Selbsttragendes Druckelement (19) aufzunehmen, **dadurch gekennzeichnet, dass** die seitlichen Streben (2a-e) jeweils mit den Längsstreben (7a-g) durch von der seitlichen Streben (2a-e) und der Längsstreben (7a-g) unabhängige Verbindungselemente (12a-d) gekoppelt und ausgelegt sind, um in die seitlichen Streben (2a-e) und die Längsstreben (7a-g) eingefügt zu werden, damit der so geformte Träger starr und selbsttragend ist, wobei der Träger dann einen zentralen ausgesparten Teil aufweist, wobei die Längsstreben (7a-g) jeweils vordere und hintere Auflageflächen (8) definieren, von denen jede dazu ausgelegt ist, die Auflage des Selbsttragenden Druckelements (19) aufzunehmen.

2. Vorrichtung (1a-f) nach dem vorhergehenden Anspruch, **dadurch gekennzeichnet, dass** die Verbindungselemente (12a-d), die seitlichen Streben (2a-e) und die Längsstreben (7a-g) angeordnet sind, um voneinander abmontiert werden zu können.

3. Vorrichtung (1a-f) nach einem der vorhergehenden Ansprüche, **dadurch gekennzeichnet, dass** die Verbindungselemente (12a-d) angeordnet sind, um sich der Länge nach in die seitlichen Streben (7a-g) einzufügen.

4. Vorrichtung (1a-d) nach einem der vorhergehenden Ansprüche, **dadurch gekennzeichnet, dass** jedes Verbindungselement (12a-f) mindestens zwei Ansatzstücke (13a-b) umfasst, die im Wesentlichen senkrecht zueinander angeordnet sind, dadurch, dass jede seitliche Strebe (2a-c) an jedem ihrer Enden mindestens eine seitliche Muffe (5a-c) umfasst, die ausgelegt ist, um die seitliche Einfügung von mindestens einem der Ansatzstücke (13a-b) aufzunehmen, und dadurch, dass jede Längsstrebe (7a-e) an jedem ihrer Enden mindestens eine Längsmuffe (9a-c) umfasst, die ausgelegt ist, um die Längseinfügung von mindestens einem weiteren der Ansatzstücke (13a-b) aufzunehmen.

5. Vorrichtung (1a-d) nach dem vorhergehenden Anspruch, **dadurch gekennzeichnet, dass** jede seitliche Strebe (2a-c) mindestens eine seitliche Wand (3a-c) umfasst, die durch die seitlichen Muffen (5a-c) verlängert ist.

6. Vorrichtung (1a-d) nach einem der Ansprüche 4 bis 5, **dadurch gekennzeichnet, dass** die seitlichen Muffen (9a-c) in der Verlängerung der vorderen bzw. der hinteren Auflagefläche (8) jeder Längsstrebe (7a-e) vorgesehen sind, so dass die untere Seite der Längsmuffen (9a-c) im Wesentlichen mit der entsprechenden vorderen und hinteren Auflagefläche (8) ausgefluchtet ist.

7. Vorrichtung (1c) nach einem der Ansprüche 4 bis 6, **dadurch gekennzeichnet, dass** die Längsmuffen (9b) unter der vorderen und hinteren Auflagefläche (8) jeder Längsstrebe (7b-d) vorgesehen sind, so dass sich die untere Seite der Längsmuffen (9b) unter der entsprechenden vorderen und hinteren Auflagefläche (8) befindet.

8. Vorrichtung (1d) nach einem der Ansprüche 5 und 6, **dadurch gekennzeichnet, dass** mindestens eine der Längs- (9c) und seitlichen Muffen (5c) mindestens eine Zugangsöffnung (27) umfasst, die ausgelegt ist, um einen Durchgang für die feste Verbindung des Ansatzstücks (13b) mit der Längs- (7e) bzw. seitlichen Strebe (2c) mit Hilfe von mindestens einem Zwischen-Blockierelement zu lassen.

9. Vorrichtung (1d) nach dem vorhergehenden Anspruch, **dadurch gekennzeichnet, dass** die Verbindungselemente (12f) jeweils mindestens eine Durchgangsöffnung (34) umfassen, die ausgelegt ist, um mit dem Blockierelement für die feste Verbindung des Ansatzstücks (13b) mit der Längs- (7e) bzw. seitlichen Strebe (2c) zusammenzuarbeiten.

10. Vorrichtung (1e-1f) nach einem der Ansprüche 1 bis 3, **dadurch gekennzeichnet, dass** jede seitliche Strebe (2d-e) mindestens eine seitliche Wand (3d-e) umfasst, die von mindestens zwei Einfügungsöffnungen (29) durchquert wird, dadurch, dass jede Längsstrebe (7f-g) mindestens zwei Einfügungsbereiche (31, 33) umfasst, die gegenüber den Einfügungsöffnungen (29) vorgesehen und jeweils ausgelegt sind, um die Einfügung des Verbindungselements (12c-d) aufzunehmen, das die Einfügungsöffnung (29) durchquert, die der seitlichen Wand (3d-e) entspricht, wobei das Verbindungselement (12c-d) mindestens einen Anschlag umfasst, der ausgelegt ist, um auf der Fläche der seitlichen Wand (3d-e) aufzuliegen, die dem Einfügungsbereich (31, 33) gegenüber liegt.

11. Vorrichtung (1e-1f) nach Anspruch 10, **dadurch gekennzeichnet, dass** jede Längsstrebe (7f-g) ein Profil umfasst, das ein Aufnahme bildet, in der der Einfügungsbereich (31, 33) vorgesehen ist.

12. Vorrichtung (1f) nach Anspruch 11, **dadurch gekennzeichnet, dass** der Einfügungsbereich (33) durch mindestens eine offene Form mit einem im Wesentlichen kreisbogenförmigen Schnitt gebildet und mit mindestens einer Wand der Aufnahme verbunden ist.

13. Vorrichtung (1f) nach Anspruch 11, **dadurch gekennzeichnet, dass** der Einfügungsbereich (33) mit Bezug auf die Aufnahme dezentriert ist.

14. Vorrichtung (1f) nach Anspruch 10, **dadurch gekennzeichnet, dass** das Verbindungselement (12d) ein Tannenbaumstift mit Kopf ist.

15. Vorrichtung (1c) nach Anspruch 4, **dadurch gekennzeichnet, dass** das Verbindungselement (12d-e) mindestens einen Führungsfinger (25) umfasst, wobei mindestens eine der seitlichen und Längsstreben (2b-d, 7b-d) mindestens eine Durchführung (24) umfasst, die ausgelegt ist, um den Führungsfinger (25) aufzunehmen.

16. Vorrichtung nach Anspruch 4, **dadurch gekennzeichnet, dass** die Anschlussstücke (13a-b) und die seitlichen (5a-c) und Längsmuffen (9a-c) im Wesentlichen parallelepipedische Abschnitte aufweisen.

17. Vorrichtung (1a-f) nach einem der vorhergehenden Ansprüche, **dadurch gekennzeichnet, dass** sie mindestens einen Abscheider (20) umfasst, der eine gesamte Außenform aufweist, die im Wesentlichen gleich derjenigen von mindestens einer der seitlichen Streben (2a-e) ist, um durch ein im Wesentlichen ähnliches industrielles Werkzeug erhalten werden zu können.

18. Vorrichtung (1a-f) nach einem der vorhergehenden Ansprüche, **dadurch gekennzeichnet, dass** sie vordere und hintere Längsstreben (7a-g) umfasst, die gesamte Außenformen aufweisen, die im Wesentlichen ähnlich sind, um durch ein im Wesentlichen ähnliches industrielles Werkzeug erhalten werden zu können.

19. Vorrichtung (1a-f) nach einem der vorhergehenden Ansprüche, **dadurch gekennzeichnet, dass** sie mindestens ein Selbsttragendes Druckelement (19) umfasst.

20. Vorrichtung nach einem der vorhergehenden Ansprüche, **dadurch gekennzeichnet, dass** sie mindestens einen Querträger umfasst, der zwischen den seitlichen Streben vorgesehen ist, wobei der Querträger ausgelegt ist, um das selbsttragende Druckelement zu tragen, wobei der Querträger mit den seitlichen Streben durch Verbindungselemente gekoppelt ist.

21. Vitrine zur Aufbewahrung und Ausgabe, umfassend mindestens eine Tragestruktur, die ausgelegt ist, um mindestens eine Vorrichtung zur Aufbewahrung und Ausgabe zu tragen, **dadurch gekennzeichnet, dass** sie mindestens eine Vorrichtung (1a-f) nach einem der vorhergehenden Ansprüche umfasst.

## Claims

1. Device (1a-f) for storing and dispensing objects with self-supporting push member (19) comprising at least one carrier formed by at least two side posts (2a-e) and two anterior and posterior longitudinal posts (7a-g), said carrier being suitable for receiving at least one self-supporting push member (19), **characterised in that** said side posts (2a-e) are coupled respectively to said longitudinal posts (7a-g) by independent junction members (12a-d) of said side posts (2a-e) and of said longitudinal posts (7a-g) and suitable for being inserted into said side posts (2a-e) and into said longitudinal posts (7a-g) so that said carrier formed as such is rigid and self-supporting, said carrier thus having a central recessed portion, said longitudinal posts (7a-g) respectively defining anterior and posterior bearing surfaces (8), with each one suitable for receiving the bearing of said self-supporting push member (19).

2. Device (1a-f) as claimed in the preceding claim, **characterised in that** said junction members (12a-d), said side posts (2a-e) and said longitudinal posts (7a-g) are arranged in order to be able to be dissembled from one another.

3. Device (1a-f) according to any of the preceding claims, **characterised in that** said junction members (12a-d) are arranged to be inserted longitudinally into said longitudinal posts (7a-g).

4. Device (1a-d) as claimed in any preceding claim, **characterised in that** each junction member (12a-f) comprises at least two tips (13a-b) arranged substantially perpendicular to one another, **in that** each side post (2a-c) comprises, at each one of its ends, at least one side sleeve (5a-c) suitable for receiving the side insertion of at least one of said tips (13a-b), **in that** each longitudinal post (7a-e) comprises, at each one of its ends, at least one longitudinal sleeve (9a-c) suitable for receiving the longitudinal insertion of at least one other of said tips (13a-b).

5. Device (1a-d) as claimed in the preceding claim, **characterised in that** each side post (2a-c) comprises at least one side wall (3a-c) extended by said side sleeves (5a-c).

6. Device (1a-d) according to any of claims 4 or 5, **characterised in that** said longitudinal sleeves (9a-c) are provided in the extension respectively of said anterior and posterior bearing surfaces (8) of each longitudinal post (7a-e) in such a way that the lower face of said longitudinal sleeves (9a-c) is substantially aligned with said corresponding anterior and posterior bearing surfaces (8).

7. Device (1c) according to any of claims 4 to 6, **characterised in that** said longitudinal sleeves (9b) are provided under said anterior and posterior bearing surfaces (8) of each longitudinal post (7b-d) in such a way that the lower face of said longitudinal sleeves (9b) is located under said corresponding anterior and posterior bearing surfaces (8).

8. Device (1d) according to any of claims 5 and 6, **characterised in that** at least one of said longitudinal (9c) and side (5c) sleeves comprises at least one access orifice (27) suitable for leaving a passage for the securing of said tip (13b) respectively to said longitudinal (7e) and side (2c) post, by the intermediary of at least one intermediate blocking member.

9. Device (1d) as claimed in the preceding claim, **characterised in that** said junction members (12f) each comprise at least one passage orifice (34) suitable for engaging with said intermediate blocking member for the securing of said tip (13b) respectively to said longitudinal (7e) and side (2c) post.

10. Device (1e-1f) according to any of claims 1 to 3, **characterised in that** each side post (2d-e) comprises at least one side wall (3d-e) through which passes at least two insertion orifices (29), **in that** each longitudinal post (7f-g) comprises at least two insertion zones (31, 33) provided across from said insertion orifices (29) and each suitable for receiving the insertion of said junction member (12c-d) passing through said corresponding insertion orifices (29) of said side wall (3d-e), with said junction member (12c-d) comprising at least one abutment suitable for bearing against the face of said side wall {3d-e} opposite said insertion zone (31, 33).

11. Device (1e-1f) according to claim 10, **characterised in that** each longitudinal post (7f-g) comprises a profile that forms a housing wherein said insertion zone (31, 33) is provided.

12. Device (1f) according to claim 11, **characterised in that** said insertion zone (33) is defined by at least one open shape with a generally arc of circle section and connected to at least one wall of said housing.

13. Device (1f) according to claim 11, **characterised in that** said insertion zone (33) is decentred with respect to said housing.

14. Device (1f) according to claim 10, **characterised in that** said junction member (12d) is a tree screw with head.

15. Device (1c) according to claim 4, **characterised in that** said junction member (12d-e) comprises at least one guide finger (25), at least one of said side and longitudinal posts (2b-d, 7b-d) comprises at least one shaft (24) suitable for receiving said guide finger (25).

16. Device according to claim 4, **characterised in that** said tips (13a-b) and side (5a-c) and longitudinal (9a-c) sleeve are substantially parallelepiped sections.

17. Device (1a-f) as claimed in any preceding claim, **characterised in that** it comprises at least one separator (20) having a global exterior shape that is substantially similar to that of at least one of said side posts (2a-e) in such a way as to be able to be obtained by a substantially similar industrial tool.

18. Device (1a-f) as claimed in any preceding claim, **characterised in that** it comprises anterior and posterior longitudinal posts (7a-g) having global exterior shapes that are substantially similar in such a way as to be able to be obtained by a substantially similar industrial tool.

19. Device (1a-f) as claimed in any preceding claim, **characterised in that** it comprises at least one self-supporting push member (19).

20. Device according to any of the preceding claims, **characterised in that** it comprises at least one traverse provided between the side posts, said traverse being suitable for carrying said self-supporting push member, said traverse being coupled to said side posts by junction members.

21. Display for storing and dispensing comprising at least one bearing structure suitable for carrying at least one device for storing and dispensing, **characterised in that** it comprises at least one device (1a-f) as claimed in any preceding claim.
